# EUROPEAN PATENT SPECIFICATION

(11) **EP 0 348 993 B1**
(45) Date of publication and mention of the grant of the patent: **26.01.1994**
(21) Application number: 89111921.6
(22) Date of filing: 30.06.1989
(51) Int. Cl.: D04H 1/42

(54) **Composite non-woven fabric material, method of its production and its use**
Verbundvliesstoff, Verfahren zu dessen Herstellung und seine Verwendung
Etoffe non tissée composite, son procédé de fabrication et son utilisation

(30) Priority: 30.06.1988 JP 164298/88
(43) Date of publication of application: 03.01.1990
(73) Proprietor: OSAKA GAS CO., LTD., Osaka-shi, Osaka-fu 541 (JP)
(72) Inventor: Kyutoku, Hirofumi, Ikoma-shi Nara-ken (JP); Matsuoka, Hiroyuki, Naga-gun Mie-ken (JP); Otani, Yoshihisa, Himeji-shi Hyogo-ken (JP)
(74) Representative: Beetz & Partner Patentanwälte

(56) References cited:
- EP-A- 0 079 808
- GB-A- 979 535
- US-A- 3 148 105

## Description

The present invention relates to a heat-resistant non-woven fabric composite material as defined in the preamble of claim 1, a method for its production and its use, particularly for cushions, conveyor belts, bag filters, sealing materials, etc., which can be used at elevated temperatures.

Heat resistant materials used for the above mentioned products are known and include both non-woven material formed of a single kind of fibers, and layered non-woven materials made of at least two kinds of fibers.

Non-woven materials may be formed exclusively of asbestos fibers, stainless steel fibers and the like heat resistant fibers. Asbestos material has been heretofore widely used because of its low price and its excellent heat resistivity. However, the use of asbestos is now strictly regulated in view of environmental and public health concerns because filaments of asbestos floating in air are now known to have adverse effects on human health.

Although the stainless steel fabrics are excellent in heat resistance, flexibility, springiness and cushioning property, etc., the high cost thereof prevents wide use in various fields.

JP-A- 24572/1975 discloses a layered fabric material comprising a compacted mass of metal fibrers such as stainless steel fibers or the like and a compacted mass of inorganic fibers such as rockwool fibers, glass fibers, asbestos fibers or the like. This material is produced by bonding the fiber masses with needle punching and firing the bonded fiber masses to form an interlocked layer at the interface of the fiber masses.

In the case of a layered material comprising rockwool fibers or asbestos fibers and metal fibers, the firing step is required to firmly hold the two layers together since the bonding force obtained between the interlocked layers by needle punching alone is too weak to keep the layers integral. However, the need to use a firing step makes this whole manufacturing process complicated, and the product obtained shows lowered springiness or cushioning property.

When the layered material is formed of glass fibers and metal fibers, its use is limited because the heat conductivity of glass fibers is low.

A heat-resistant composite non-woven fiber material comprising at least one steel fiber layer and at least one non-metallic non-woven fiber layer which are alternating, adjacent layers being interlocked to form an integrated composite material, and one end of the surface layers thereof being a steel fiber layer, has been known from GB-A-979 535. This prior art composite material may be a two-ply or a three-ply mat, one of the surface layers necessarily being a non-metallic fiber layer. The fibers of the non-metallic fiber layer are preferably made of a mixture of fibers of polyester, cotton or sheep wool or cellulose fibres. The fibrous fleece may be impregnated with water repellent substances. The composite materials according to this prior art are preferably provided for covering the calender or mangle rolls of mangles or calenders and laundry presses and ironers in general.

GB-A-979 808 discloses heat resistant pads comprising a plurality of layers each made of a mixture of carbon fibers and aromatic polyamide fibers which may be coated and impregnated with a silicone resin to improve wear resistance and impact resistance.

It is the object of the present invention to provide a composite non-woven fabric material which exhibits strong bonding between the different fabric layers, is stable at high temperatures and has good lubricating properties, and which can be easily produced at a reasonable cost, a method for its production and its use, particularly as sealing, filter and cushioning materials and for conveyor belts.

The above object is achieved according to the independent claims. The dependent claims relate to preferred embodiments.

The composite non-woven fiber material according to the present invention comprises at least one steel fiber layer and at least one non-metallic non-woven fiber layer which are alternating, adjacent layers being interlocked to form an integrated composite material, and one of the surface layers being a steel fiber layer;
it is characterized in that
- the at least one steel fiber layer is made of stainless steel fibers,
   and
- the at least one non-metallic fiber layer is made of carbon fibers.

The method according to the present invention for producing the above defined composite materials is based on laminating and interlocking at least one non-metallic non-woven fiber layer together with at least one steel fiber layer in such a manner that the non-metallic fiber layers and the steel fiber layers are alternating, and at least one surface layer of the laminate is a steel fiber layer;
it is characterized in that
- stainless steel fiber layers are used as steel fiber layers
   and
- a carbon fiber layer is used as non-metallic fiber layer.

For obtaining such the interlocking of the adjacent layers, needle punching or using a water jet is preferred.

Carbon fibers to be used in the invention may be selected from those produced from pitch materials and from organic polymers such as polyacrylonitrile (PAN), etc. The mass per area of a single carbon fiber layer is not critical, but it is usually from about 30 to about 2500 g/m², preferably from about 50 to about 2300 g/m². If this ratio is less than 30 g/m², the amount of the carbon fiber layer is greatly reduced, and the cost advantage of using a carbon fiber layer together with a stainless steel layer is lost. If this ratio exceeds 2500 g/m², the filaments positioned at the interface portions of the carbon fiber layer cannot be interlocked intimately with the filaments of the stainless steel fiber layer, and the composite is prone to separate at the interface of the carbon fiber layer when shearing forces are applied to the composite. In order to improve the resistance to separation of the composite material, a thin stainless steel fiber layer may be incorporated within the carbon fiber layer.

The mass per area of a single stainless steel layer is also not critical, but it is usually from about 50 to about 2500 g/m², preferably from about 120 to about 2000 g/m². When the ratio is less than 50 g/m², a uniform stainless steel fiber layer is difficult to prepare, and an uneven fiber layer exhibits poor heat resistance and abrasion resistance. When this ratio is over 2500 g/m², the relative amount of expensive stainless steel fibers is increased, and the cost effectiveness of the invention will be reduced. The diameter of the filaments forming the stainless steel fibers is usually from about 2 to about 50 µm. When the composite material of the invention is used as heat resistant cushioning material, the diameter of the stainless steel fibers preferably is from about 5 to about 20 µm. When the stainless steel fibers are formed of filaments with a small diameter of less than 2 µm, the fibers are prone to fracture. With a diameter of filaments of more than 50 µm, the needle-punching step becomes difficult because the needles used are easily broken.

The number of each of layers of the stainless steel fibers and the carbon fibers is not limited and variable as required. For example, the composite material according to the invention may have a two-layer structure of a single carbon fiber layer and a single stainless steel fiber layer, or a three-layer structure of two stainless steel layers and a carbon fiber layer interposed therebetween, or a multi-layer structure wherein at least two carbon fiber layers and at least two stainless steel layers are alternately laminated. The composite material of the invention may include an intermediate layer or layers between the carbon fiber layer and the stainless steel fiber layer in order to improve the tensile strength of the composite. The intermediate layer may be glass fiber cloth, stainless steel fiber cloth, etc.

It is essential for the composite material of the invention to have a stainless steel fiber layer on at least one exposed surface of the composite. The upper limit of the temperature at which the carbon fibers may be used in air is about 400 to about 450°C whereas stainless steel fibers are useful at temperatures up to about 600°C. Thus, the composite material of the invention can be in contact with hot articles or interrupt or shut off hot air with the stainless steel fiber layer exposed to the hot article or hot air. The composite material with the surface stainless steel fiber layer is also useful in cases where it is used at temperatures below 400°C but the carbon fiber layer has to be mechanically reinforced.

The stainless steel fiber layer and the carbon fiber layer are integrated into a composite through the interlocking of filaments of both layers. If the two layers are bonded with an inorganic adhesive which is stable at high temperatures over 400°C, the resultant product is low in flexibility, and the product application will therefore be limited. When an organic adhesive is used, the bonded product cannot be used at elevated temperatures.

Various methods for integrating the stainless steel fiber layer and the carbon fiber layer by interlocking filaments of both layers may be used. Preferably, both layers are combined by needle punching. The integrated product obtained by needle punching shows high resistance to sepa ration of layers due to intimate interlocking of filaments of both fiber layers and good springiness or cushioning properties. The composite material of the invention may also be produced by interlocking the filaments of both fiber layers with use of a water jet loom.

The composite material of the invention is not limited in thickness. Products with about 3 to about 50 mm in thickness can easily be prepared.

The composite non-woven fiber material of the invention has a wide variety of uses which include: heat resisting cushioning materials useful, for example, for supporting and relieving mechanical and/or thermal shock to glass products such as cathode ray tubes processed at high temperatures, conveyor belts for carrying heated articles, sealing material for shutting off extremely hot gases, filter materials for use at high temperatures, etc.

The total heat conductivity of the composite can be varied when required by changing the relative thicknesses of the stainless steel fiber layer and the carbon fiber layer.

The stainless steel fiber layer formed on at least one exposed surface of the composite material of the invention functions as a heat insulator and can protect the carbon fiber layer integrated therewith against oxidation due to a hot atmosphere over 400°C. Thus the composite material of the invention can, at high temperatures, replace expensive non-woven fabrics made of stainless steel fibers alone. Even at lower temperatures, the composite material of the invention economically replaces non-woven fabrics of stainless steel fibers alone which are used because of their excellent chemical resistance, flexibility, springiness, bending property, abrasion resistance, etc.

In addition, when the carbon fiber layer comes into contact with a moving article or element, it ensures a high abrasion resistance because of its good lubricating property.

In sum, the composite material of the invention shows an excellent durability under differing conditions resulting from the various improved properties mentioned above.

Given below are examples to illustrate the invention with reference to the accompanying drawings.
- Fig. 1: shows a cross section of the composite non-woven fabric material according to the invention.
- Fig. 2: shows the use of the composite material of the invention as cushioning element.
- Fig. 3: shows the use of the composite material of the invention as sealing element.

### Example 1

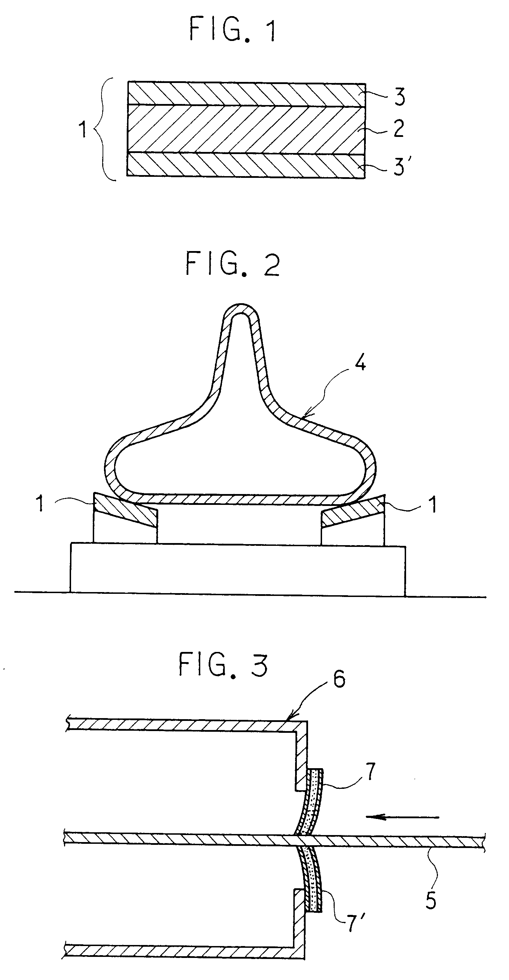

Fig. 1 is a cross section of a composite material of the invention.

The composite material 1 was prepared by placing on both sides of a carbon fiber layer 2 two stainless steel fiber layers 3, 3′ and then needle-punching (143 punches/100mm², 925 punches/inch²) the layers together to form the integrated composite material.

The carbon fiber layer 2 was formed by a non-woven fabric prepared from pitch carbon fibers (diameter 13 µm; density 1.65 g/cm³; tensile strength 70 kg/mm²; elastic modulus 3.5 · 10³ kg/mm²) using a carding machine. The mass per unit area was 260 g/m².

The stainless steel fiber layer 3 was a commercial web formed from stainless steel fibers (diameter 12 µm; density 7.9 g/cm³; elastic modulus 2 · 10⁴ kg/mm²). The mass per unit area was 500 g/m².

The characteristics of the composite material 1 were as follows:

| | |
|---|---|
| mass per unit area: | 900 g/m² |
| thickness: | 5 - 5.5 mm |
| bulk density: | 0.18 g/cm³. |

### Comparison Example 1

A non-woven fabric was prepared by needle punching (119 punches/100mm², 766 punches/inch²) a fiber layer formed of stainless steel fibers alone.

The characteristics of the non-woven fabric obtained were as follows:

| | |
|---|---|
| mass per unit area: | 1500 g/m² |
| thickness: | 5 - 5.5 mm |
| bulk density: | 0.3 g/cm³. |

### Evaluation of properties

### (1) Flexibility

The products obtained in Example 1 and in Comparative Example 1 were tested for bending resistance in accordance with JIS (Japanese Industrial Standard)-L-1096 6-20-1.

The bending resistance of the material of Example 1 was 6220 mg while the value for the material of Comparative Example 1 was found to be 6800 mg.

Thus, it was confirmed that the product of Example 1 was substantially similar to the product of Comparison Example 1 in flexibility.

### (2) Heat conductivity

The products of Example 1 and of Comparative Example 1 were placed on a plate kept at 300°C and were checked for the rise of temperature at the surface of the product after 3 minutes.

The temperature of the product of Example 1 was 190°C whereas the temperature of the product of Comparative Example 1 was 195°C.

It was confirmed from the results of these tests that both products were substantially the same in heat conductivity.

### (3) Cushioning property at elevated temperature

The product 1 of Example 1 was used for supporting cathode ray tubes 4 at 600°C in a step of glass processing as shown in Fig. 2.

After 6 weeks, it was found that the product of Example 1 showed little change in thickness and shape and had similar properties as the product of Comparative Example 1 in heat resistance and was capable of effectively protecting fragile cathode ray tubes from mechanical and thermal shocks.

### (4) Abrasion resistance

The products obtained in Example 1 and in Comparative Example 1 were tested for abrasion resistance in accordance with JIS-L-1021-612 using an abrasion ring of H38 and a load of 500 g.

The results after 1000 rotations were 705 for the product of Example 1 and 980 for that of Comparative Example 1. These values correspond to the amount of mass loss multiplied by 1000.

The results indicate that the product of Example 1 has substantially the same abrasion resistance as the product of Comparative Example 1.

The smaller mass loss of the product of Example 1 than that of Comparative Example 1 may be attributed to the higher number of punches/unit area employed in Example 1.

### (5) Durability

The composite material obtained in Example 1 was used for sealing elements 7, 7′ of an annealing furnace 6 kept at 900°C into which a sheet of stainless steel 5 was continuously introduced at a speed of 200 m/min as shown in Fig. 3. Sealing elements of the non-woven fabric obtained in Comparative Example 1 were also used under the same conditions as the product of Example 1.

Each sealing element 7 or 7′ was 1700 mm x 300 mm in size and slightly pressed against the stainless steel sheet 5 to hermetically close the furnace.

The sealing elements 7, 7′ prepared from the product of Comparative Example 1 had to be replaced already after 2 months because filaments of the stainless steel fiber were gradually broken and lost due to high abrasion thereof in contact with the stainless steel sheet 5.

In contrast, the sealing elements 7, 7′ prepared from the product of Example 1 could be used for 4 months without any difficulty. The remarkable result may be attributed to the fact that the product of Example 1 has the carbon fiber layer 2 exposed at the end portion which exhibits a good lubricating property against the stainless steel sheet 5.

## Claims

1. Heat-resistant composite non-woven fiber material comprising at least one steel fiber layer (3, 3') and at least one non-metallic non-woven fiber layer (2) which are alternating, adjacent layers being interlocked to form an integrated composite material, and one of the surface layers being a steel fiber layer (3, 3'),
characterized in that
- the at least one steel fiber layer (3, 3') is made of stainless steel fibers,
and
- the at least one non-metallic fiber layer (2) is made of carbon fibers.

2. The composite material according to claim 1, wherein the mass per area of the carbon fiber layer (2) is about 30 to about 2500 g/m² and preferably about 50 to about 2300 g/m².

3. The composite material according to claim 1 or 2, wherein the mass per area of the stainless steel fiber layer (3, 3') is about 50 to about 2500 g/m² and preferably about 120 to about 2000 g/m².

4. The composite material according to one of claims 1 to 3, wherein the diameter of the filaments forming the stainless steel fiber layer (3, 3') is about 2 to about 50 µm.

5. The composite material according to one of claims 1 to 4, wherein the alternate stainless steel fiber layers (3, 3') and the carbon fiber layers (2) are needle-punched together to form the integrated composite material.

6. The composite material according to one of claims 1 to 5, wherein a thin stainless steel fiber layer is incorporated in the carbon fiber layer (2).

7. The composite material according to one of claims 1 to 6, wherein an intermediate layer or intermediate layers made of glass fiber cloth or stainless steel fiber cloth are provided between the carbon fiber layer (2) and the stainless steel layers (3, 3').

8. A method for the production of the composite materials according to one of claims 1 to 7, by laminating and interlocking at least one non-metallic non-woven fiber layer (2) together with at least one steel fiber layer (3, 3') in such a manner that the non-metallic fiber layers (2) and the steel fiber layers (3, 3') are alternating, and at least one surface layer of the laminate is a steel fiber layer (3, 3'),
characterized in that
- stainless steel fiber layers are used as steel fiber layers (3, 3'),
and
- a carbon fiber layer is used as non-metallic fiber layer (2).

9. The method according to claim 8, characterized in that the stainless steel layers (3, 3') and the carbon fiber layers (2) are interlocked by needle punching or by means of a water jet.

10. Use of the composite material according to one of claims 1 to 7 as sealing materials, filter materials, particularly bag filters, cushioning materials, particularly in glass processing, and for conveyor belts.

11. Use of the composite material according to one of the claims 1-7 as sealing elements in annealing furnaces.

12. Use of the composite material according to one of the claims 1-7 as cushioning elements for high temperature cushions, particularly for glass processing.

## Patentansprüche

1. Wärmebeständiges, Faservliesverbundmaterial mit mindestens einer Stahlfaserschicht (3, 3') und mindestens einer nichtmetallischen Faservliesschicht (2), die abwechselnde, nebeneinanderliegende Schichten sind, die miteinander verbunden werden, um einen einstückigen Verbundstoff zu bilden, und wobei eine der Oberflächenschichten eine Stahlfaserschicht (3, 3') ist,
**dadurch gekennzeichnet,** daß
- die mindestens eine Stahlfaserschicht (3, 3') aus rostfreien Stahlfasern hergestellt ist,
und
- die mindestens eine nichtmetallische Faserschicht (2) aus Kohlefasern hergestellt ist.

2. Verbundmaterial gemäß Anspruch 1, bei dem die Masse pro Fläche der Kohlefaserschicht (2) etwa 30 bis ungefähr 2500 g/m² und vorzugsweise etwa 50 bis etwa 2300 g/m² beträgt.

3. Verbundmaterial gemäß Anspruch 1 oder 2, bei dem die Masse pro Fläche der rostfreien Stahlfaserschicht (3, 3') etwa 50 bis etwa 2500 g/m² und vorzugsweise etwa 120 bis etwa 2000 g/m² beträgt.

4. Verbundmaterial gemäß einem der Ansprüche 1 bis 3, bei dem der Durchmesser der Fäden, die die Faserschicht aus rostfreiem Stahl bilden, etwa 2 bis etwa 50 µm beträgt.

5. Verbundmaterial gemäß einem der Ansprüche 1 bis 4, bei dem die abwechselnden Faserschichten aus rostfreiem Stahl (3, 3') und die Kohlefaserschichten (2) zum Bilden des einstückigen Verbundstoffs miteinander vernadelt sind.

6. Verbundmaterial gemäß einem der Ansprüche 1 bis 5, bei dem eine dünne Schicht aus rostfreiem Stahl mit der Kohlefaserschicht (2) vereinigt ist.

7. Verbundmaterial gemäß einem der Ansprüche 1 bis 6, bei dem eine Zwischenschicht oder Zwischenschichten aus Glasfasergewebe oder Fasergewebe aus rostfreiem Stahl zwischen der Kohlefaserschicht (2) und den Schichten aus rostfreiem Stahl (3, 3') angeordnet sind.

8. Verfahren zur Herstellung des Verbundstoffs gemäß einem der Ansprüche 1 bis 7 durch schichtweises Legen und miteinander Verbinden mindestens einer nichtmetallischen, Faservliesschicht (2) mit mindestens einer Stahlfaserschicht (3, 3') derart, daß die nichtmetallischen Faserschichten (2) und die Stahlfaserschichten (3, 3') einander abwechseln, und daß mindestens eine Oberflächenschicht der Folie eine Stahlfaserschicht (3, 3') ist, dadurch gekennzeichnet, daß
- die Faserschichten aus rostfreiem Stahl als Stahlfaserschichten (3, 3') verwendet werden
und
- eine Kohlefaserschicht als nichtmetallische Faserschicht (2) verwendet wird.

9. Verfahren gemäß Anspruch 8, dadurch gekennzeichnet, daß die Schichten (3, 3') aus rostfreiem Stahl und die Kohlefaserschichten (2) durch Vernadeln oder mit Hilfe eines Wasserstrahls miteinander verbunden sind.

10. Verwendung des Verbundmaterials gemäß einem der Ansprüche 1 bis 7 als Dichtungsmaterial, Filtermaterial, insbesondere Sackfilter, Polstermaterial, insbesondere in der Glasverarbeitung und für Förderbänder.

11. Verwendung des Verbundmaterials gemäß einem der Ansprüche 1 bis 7 als Dichtungselemente in Glühöfen.

12. Verwendung des Verbundmaterials gemäß einem der Ansprüche 1 bis 7 als Polsterelemente für Hochtemperaturpolster, insbesondere in der Glasverarbeitung.

## Revendications

1. Matière fibreuse non-tissée composite résistant à la chaleur, qui comprend au moins une couche de fibres d'acier (3,3') et au moins une couche de fibres non-tissées non métalliques (2) en alternance, les couches adjacentes étant mutuellement liées pour former une matière composite intégrée, et une des couches de surface étant une couche de fibres d'acier (3,3'),
caractérisée en ce que
ladite au moins une couche de fibres d'acier (3,3') est constituée de fibres d'acier inoxydable, et
ladite au moins une couche de fibres non métalliques (2) est constituée de fibres de carbone.

2. Matière composite suivant la revendication 1, dans laquelle la masse par unité de surface de la couche de fibres de carbone (2) estcomprise entre 30 g/m² environ et 2500 g/m² environ, et de préférence entre 50 g/m² environ et 2300 g/m² environ.

3. Matière composite suivant la revendication 1 ou 2, dans laquelle la masse par unité de surface de la couche de fibres d'acier inoxydable (3,3') est comprise entre 50 g/m² environ et 2500 g/m² environ, et de préférence entre 120 g/m² environ et 2000 g/m² environ.

4. Matière composite suivant une des revendications 1 à 3, dans laquelle le diamètre des filaments formant la couche de fibres d'acier inoxydable (3,3') est compris entre 2 µm environ et 50 µm environ.

5. Matière composite suivant une des revendications 1 à 4, dans laquelle les couches de fibres d'acier inoxydable (3,3') et les couches de fibres de carbone (2) alternées sont aiguilletées ensemble pour former la matière composite intégrée.

6. Matière composite suivant une des revendications 1 à 5, dans laquelle une couche mince de fibres d'acier inoxydable est incorporée dans la couche de fibres de carbone (2).

7. Matière composite suivant une des revendications 1 à 6, dans laquelle une couche intermédiaire ou des couches intermédiaires en toile de fibres de verre ou en toile de fibres d'acier inoxydable est/sont prévue(s) entre la couche de fibres de carbone (2) et les couches d'acier inoxydable (3,3').

8. Procédé de fabrication des matières composites suivant une des revendications 1 à 7, par superposition et liaison mutuelle d'au moins une couche de fibres non-tissées non métalliques (2) en combinaison avec au moins une couche de fibres d'acier (3,3') d'une manière telle que les couches de fibres non métalliques (2) et les couches de fibres d'acier (3,3') sont alternées et au moins une couche de surface du stratifié est une couche de fibres d'acier (3,3'),
caractérisé en ce que
on utilise des couches de fibres d'acier inoxydable comme couches de fibres d'acier (3,3'), et on utilise une couche de fibres de carbone comme couche de fibres non métalliques (2).

9. Procédé suivant la revendication 8, caractérisé en ce que les couches de fibres d'acier inoxydable (3,3') et les couches de fibres de carbone (2) sont liées les unes aux autres par aiguilletage ou au moyen d'un jet d'eau.

10. Utilisation de la matière composite suivant une des revendications 1 à 7 comme matière d'étanchéité, matière de filtrage, en particulier pour des filtres à sac, matière d'amortissement des chocs, en particulier pour le traitement du verre, et matière de bande transporteuse.

11. Utilisation de la matière composite suivant une des revendications 1 à 7, comme éléments d'étanchéité dans des fours de recuit.

12. Utilisation de la matière composite suivant une des revendications 1 à 7 comme éléments d'amortissement des chocs pour des supports anti-choc à haute température, en particulier dans le traitement du verre.
